# EUROPEAN PATENT APPLICATION

(11) **EP 2 017 723 A1**
(43) Date of publication of application: **21.01.2009**
(21) Application number: 08251865.5
(22) Date of filing: 29.05.2008
(51) Int. Cl.: G06F 9/44

(54) **Device and method for supporting graphical user interface application development**

(30) Priority: 12.07.2007 JP 2007182747
(71) Applicant: Hitachi Ltd., Chiyoda-ku Tokyo 100-8280 (JP)
(72) Inventor: Tanaka, Mayuko, c/o Hitachi, Ltd., Intellectual Property Group, Chiyoda-ku Tokyo 100-8220 (JP); Oeda, Shigeto, c/o Hitachi, Ltd., Intellectual Property Group, Chiyoda-ku Tokyo 100-8220 (JP)
(74) Representative: Calderbank, Thomas Roger

(57) **Abstract**

A user interface application for an embedded device has a GUI-component general-purpose-structured-data generation section, a GUI-screen edition section, and a GUI-program generation section. The GUI-screen edition section provides to a user a means for creating a GUI screen by using a GUI component represented by the GUI-component general-purpose structured data generated by the GUI-component general-purpose-data generation section to generate, based on the GUI screen created by the user, GUI-screen general-purpose structured data in which any programming language can be used. The GUI-program generation section uses GUI-screen general-purpose structured data generated by the GUI-screen edition section and a program executable in a target device to generate a GUI application executable in the target device. The thus-configured present invention provides a technique for supporting development of a user interface application for an embedded device more easily than with conventional techniques.

## Description

The present invention relates to a technique for supporting graphical-user-interface (GUI) application development.

Development of an application for an embedded device such as a digital camera requires not only programming skills but also expertise on an environment for executing the application. JP-A-2003-140893, for example, discloses such application development for an embedded device.

JP-A-2003-140893 describes a method for using a unified-modeling-language (UML) specification for designing system software and an interface to automatically generate a user-interface (UI) program using the software.

The development of the GUI application requires knowledge different from that for application development for an embedded device, such as development of processing for screen-status-transitions associated with operations performed by a user. In such a situation, recent embedded devices have been highly functionalized to have network functions, further complicating UI applications.

The purpose of the technique disclosed in JP-A-2003-140893 is to allow application developers to focus on developing GUI components, and the central feature of the technique is to automatically generate an application running on a system.

It should be noted that, in developing applications, creation of GUI components itself also needs to be considered.

The design of a GUI screen is also important in characterizing an audio/visual embedded device such as a digital television and a recorder and differentiating such a device from other companies' products. To strengthen product competitiveness, a more sophisticated screen design will be required, which, coupled with increasingly complex functions, would increase the burden to develop GUI programs and demand higher skills of developers. Furthermore, since the development cycles of products are getting shorter, it is required to develop more complicated programs for a shorter time period.

The object of the present invention is to provide a technique for supporting development of a user-interface (UI) application for an embedded device more easily than conventional techniques. In other words, the object is to provide a technique which makes it possible, for developers who do not have experience in developing an application for an embedded device and those who do not have experience in developing a program (such as designers), to create a GUI screen more easily than with the conventional techniques and further to create from the GUI screen created a GUI application running on an embedded device more easily than the with conventional techniques.

According to the present invention, in order to accomplish the above object, the technique for supporting the development of a GUI application may comprise: a section for generating general-purpose structured data representing a GUI component (hereinafter referred to as a GUI-component general-purpose-structured-data generation section); a section for editing a GUI screen (hereinafter referred to as a GUI-screen edition section); and a section for generating a GUI program (hereinafter referred to as a GUI-program generation section).

The GUI-component general-purpose-structured-data generation section generates general-purpose structured data representing a GUI component (hereinafter referred to as GUI-component general-purpose structured data) from a library for GUI components (referred to as a uniquely-defined GUI-component library), the general-purpose structured data being not dependent on a specific programming language (which means that any programming language can be used in the general-purpose structured data), the library being uniquely defined in a target device. Alternatively, the GUI-component general-purpose-structured-data generation section may generate GUI-component general-purpose structured data, in which any general-purpose programming language can be used, from the uniquely-defined GUI-component library.

The GUI-screen edition section provides to a user a means for creating a GUI screen by using a GUI component represented by the GUI-component data generated by the GUI-component general-purpose-structured-data generation section. The GUI-screen edition section generates general-purpose structured data representing a GUI screen (hereinafter referred to as general-purpose GUI-screen structured data), which data is programming-language-independent, based on the GUI screen created by the user. Alternatively, the general-purpose GUI-screen structured data may be GUI-screen structured data in which a general-purpose programming language can be used.

The GUI-program generation section uses the general-purpose GUI-screen structured data generated by the GUI-screen edition section and a template program executable in the target device to generate a GUI application executable in the target device.

### IN THE DRAWINGS

Fig. 1 is a diagram showing the configuration of a device for supporting GUI-application development.

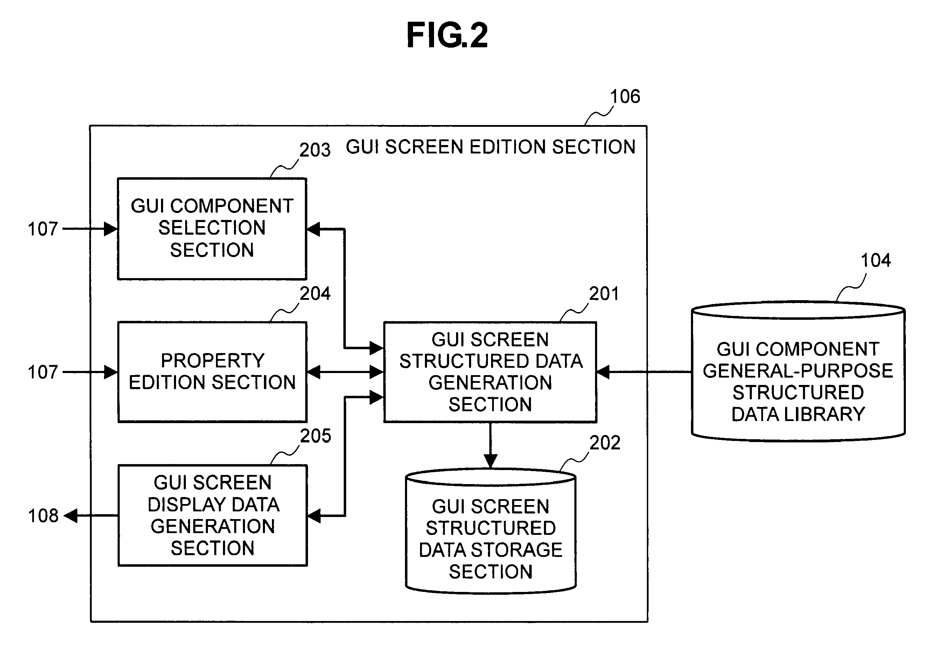

Fig. 2 is a diagram showing the configuration of a GUI-screen edition section.
Fig. 3 is a diagram showing the configuration of a GUI-program generation section.
Fig. 4 is a flowchart showing an example of processing for generating general-purpose structured data representing a GUI component.
Fig. 5 is a diagram showing an example of a format of structured data representing a GUI component.
Fig. 6 is a diagram showing an example of a format of a GUI-component list.
Fig. 7 is a list showing definitions of structured data each representing a GUI component.
Fig. 8 is a flowchart showing an example of processing for generating structured data representing a GUI screen.
Fig. 9 is a diagram showing an example of the structured data representing the GUI screen with individual GUI-component general-purpose structured data inserted therein, the individual GUI-component general-purpose structured data representing a GUI component.
Fig. 10 is a diagram showing an example of structured data representing a GUI screen.
Fig. 11 is a diagram showing an example of a GUI program generated by a GUI-program generation section.

Preferred embodiments of the present invention will be described with reference to the accompanying drawings.

### First Embodiment

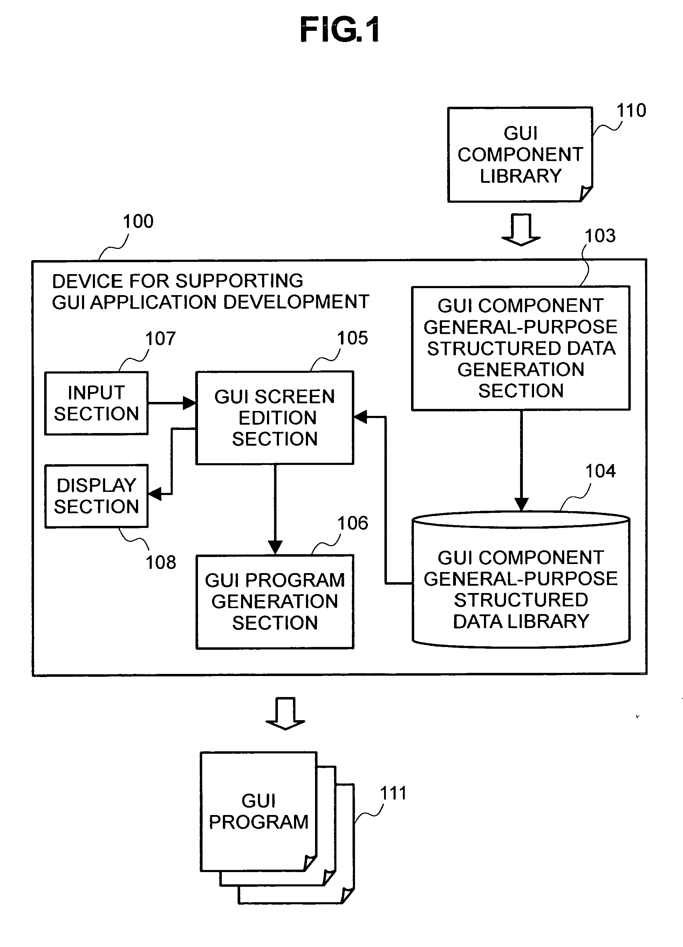

Fig. 1 is a diagram showing the configuration of a device for supporting GUI application development according to an embodiment of the present invention.

Reference numeral 100 denotes the device for supporting GUI application development according to the present invention. As shown in Fig. 1, the device 100 for supporting GUI application development includes: a section 103 for generating general-purpose structured data representing a GUI component (hereinafter referred to as a GUI-component general-purpose-structured-data generation section 103); a library 104 for general-purpose structured data (hereinafter referred to as a GUI-component general-purpose-structured-data library 104); a section 105 for editing a GUI screen (hereinafter referred to as a GUI-screen edition section 105); a section 106 for generating a GUI program (hereinafter referred to as a GUI-program generation section 106); an input section 107; and a display section 108. Reference numeral 110 denotes a GUI-component library for GUI components uniquely defined in a target device. Reference numeral 111 indicates a GUI program to be generated by the GUI-application-development supporting device according to the present embodiment.

The GUI-component general-purpose-structured-data generation section 103 converts the GUI-component library 110 into structured data which represents a GUI-component structure or a property value and which is not dependent on the environment in which the target device is executed and on the programming language to be described. The conversion of the library into the structured data not dependent on the environment of the target device makes it possible to generate GUI screens for various devices or general-purpose devices.

The GUI-screen edition section 105 provides an environment for creating a GUI screen to an application developer. The GUI-screen edition section 105 generates structured data (hereinafter referred to as GUI-screen structured data) representing a GUI screen edited in accordance with an operation performed by the user and outputs the GUI-screen structured data to the GUI-program generation section 106.

The GUI-program generation section 106 inserts a code(s) of a GUI component(s) constituting the GUI screen into a pre-registered template application code (or template program) of the target device to generate a GUI application. The GUI-program generation section 106 acquires the structure of the GUI screen and property values set in each GUI component from the general-purpose GUI-screen structured data.

Described sequentially below are processing for generating GUI-component general-purpose structured data, processing for editing a GUI screen, processing for generating general-purpose GUI-screen structured data representing the GUI screen, and processing for generating a GUI program.

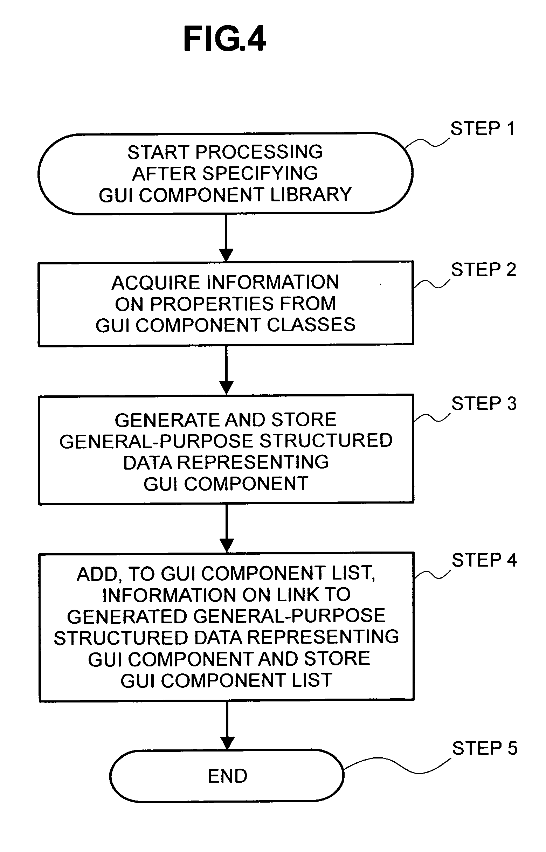

First, the processing for generating GUI-component structured data will be described with reference to Figs. 4 through 7.

Fig. 4 is a flowchart showing an example of the processing for generating GUI-component general-purpose structured data, the processing being executed by the GUI-component general-purpose-structured-data generation section 103.

### 1) Step 1

When a user specifies a GUI-component library to be imported to the GUI-application-development supporting device 100, the GUI-component general-purpose-structured-data generation section 103 starts to execute the processing for generating GUI-component general-purpose structured data.

### 2) Step 2

The GUI-component general-purpose-structured-data generation section 103 acquires class names of GUI components and information on properties of the GUI components from each of GUI-component classes included in the GUI-component library 110, the information including names, types, and initial values of properties. The information on the properties are information used to set the size of a GUI component, the location at which the GUI component is to be arranged, characters to be displayed in the GUI component, colors of the characters, colors of a background, and a background image. The information on the properties is not limited to the above and may include any property specifying a specification of the GUI component.

In the present specification, a detailed acquisition method of the class names and the property information is not described. The GUI-component general-purpose-structured-data generation section 103, however, may acquire the above-mentioned class names and information by using an application program interface of a java.beans.Introspector class defined by Java (a registered trademark) as long as, for example, GUI-component classes are those defined by Java and meet JavaBeans specifications.

### 3) Step 3

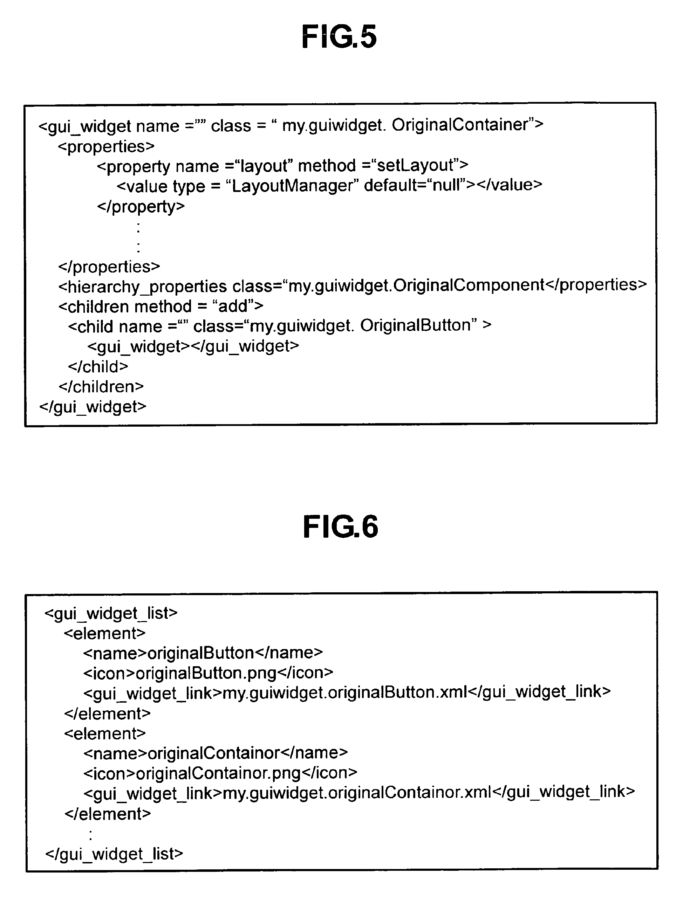

The GUI-component general-purpose-structured-data generation section 103 generates structured data representing a GUI component for each GUI class as shown in Fig. 5 based on the information acquired in Step 1. The GUI-component general-purpose-structured-data generation section 103 then stores in the GUI-component general-purpose-structured-data library 104 the generated data as GUI-component general-purpose structured data corresponding to each of the GUI classes.

### 4) Step 4

The GUI-component general-purpose-structured-data generation section 103 adds the names of the GUI components, icon information, and information on links to the structured data to a general-purpose-GUI-component list as shown in Fig. 6 and stores them. The names of the GUI components, the icon information, and the link information are used when the GUI-component structured data generated in Step 3 is supplied to a GUI-component selection section 203. The general-purpose-GUI-component list is generated for each of general-purpose-GUI-component libraries.

### 5) Step 5

After the GUI-component general-purpose-structured-data generation section 103 generates GUI-component general-purpose structured data for all GUI components included in the general-purpose-GUI-component libraries, the processing ends.

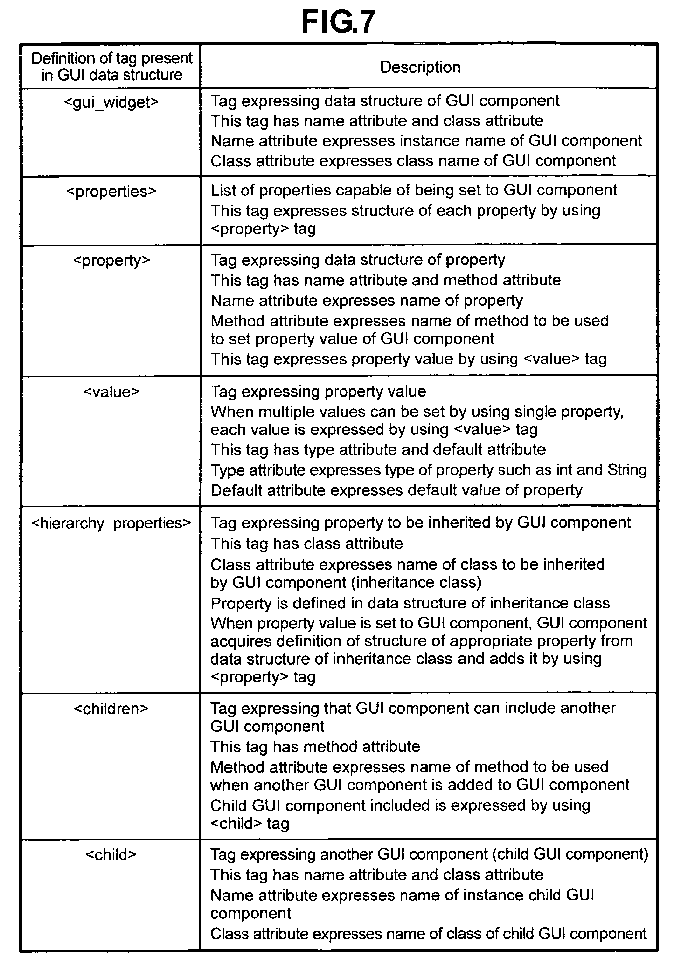

Fig. 7 is a list showing definitions of structured data each representing a GUI component.

In the present embodiment, the data structure of the GUI component is described in Extensible Markup Language (XML). XML is one of the markup languages used to describe the meaning or structure of a document or data, in which a user can uniquely define tags.

As shown in Fig. 7, the structure of each of GUI components is expressed by using a <gui_widget> tag. A <properties> tag expresses a list of properties capable of being set to the corresponding GUI component. Each of the properties is expressed by using a <property> tag, and the value of each of the properties is expressed by using a <value> tag. A <hierarchy_properties> tag expresses a list of properties to be inherited by a GUI component which inherits another GUI component. A <children> tag indicates that a GUI component can include another GUI component. A <child> tag expresses the GUI component (a child GUI component) included in a GUI component.

The structured data representing GUI components includes information on attributes, each of which defines an association with a GUI component. The <gui_widget> tag has a class attribute indicating the class name of a GUI component and also has a name attribute indicating the instance name of the GUI component. The <property> tag has a name attribute indicating the name of a property and also has a method attribute indicating the name of a method to be used to set a configured property to the GUI component. The <value> tag has a type attribute indicating the type of the property and also has a default attribute indicating a default value set for the property. The <hierarchy_properties> tag has a class attribute indicating the name of an inheritance class. The <children> tag has a method attribute indicating the name of a method to be used to add another GUI component to the GUI component. The <child> tag has a class attribute indicating the class name of a child GUI component and also has a name attribute indicating the instance name of the child GUI component.

It should be noted that the list including the tag definitions and structures is only shown as an example. Any tag definitions may be used as long as the structure of the GUI component can be expressed by a format such as the name of the GUI component, a property included in the GUI component, and the name of a method to be used to set the property. In the embodiment, XML is used to define the GUI-component general-purpose structured data; however, the language to be used for the structured data expressing a GUI component is not limited. A common format expressing the structure of the GUI component may be used regardless of the type of the language of the GUI-component library 110.

The programming language to be used for the general-purpose-GUI-component library 110 is also not limited and may be Java, C/C++ (registered trademark), or C# (registered trademark).

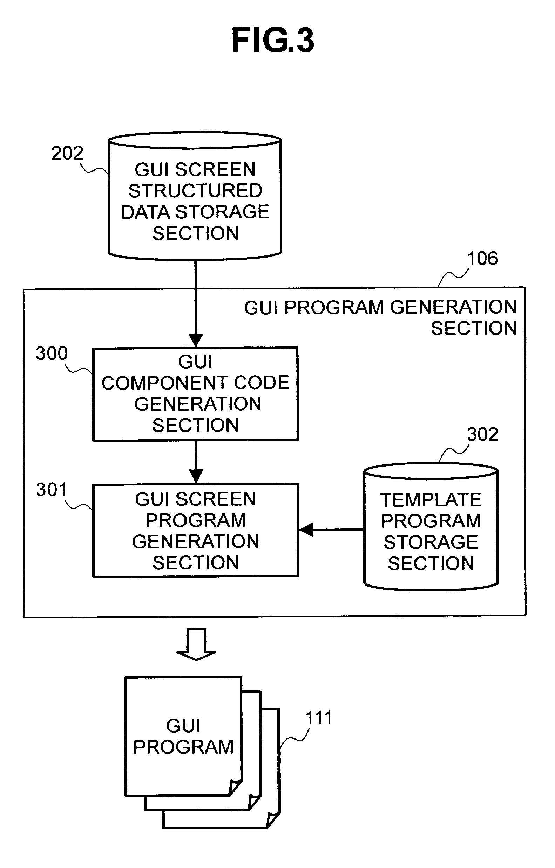

The edition of a GUI screen and the processing for generating the GUI-screen structured data will be described with reference to Figs. 3, 8, 9 and 10.

Fig. 3 is a diagram showing the configuration of the GUI-screen edition section 105.

The GUI-screen edition section 105 provides to an application developer an environment for creating a GUI screen by using the GUI-component general-purpose structured data generated by the GUI-component general-purpose-structured-data generation section 103.

The GUI-component selection section 203 shows a list of GUI components to a user and prompts the user to select a GUI component to be arranged on the GUI screen. The user selects a GUI component to be arranged on the GUI screen through the input section 107 (a mouse or the like) and pastes the selected GUI component to an edition screen provided by the GUI-screen edition section 105. A property-edition section 204 provides an interface to be used to set a property value related to a display, such as the size of the GUI component, the position of the GUI component to be arranged, a font to be used for the GUI component, and a color of the GUI component. A GUI-screen display-data generation section 205 generates a screen to be displayed on the edition screen and displays a drawing of a GUI component which is based on property values set by the user. Since the GUI-component general-purpose structured data is generated from a GUI-component library to be displayed on the edition screen, the screen generated by the GUI-screen display-data generation section 205 is the same as a screen to be displayed when the GUI component is operated in a target device.

A GUI-screen structured-data generation section 201 generates GUI-screen structured data representing a GUI screen and constituted of GUI components, which have been selected and arranged by the user through the GUI-component selection section 203, and for which property values have been set through the property-edition section 204. The GUI-screen structured-data generation section 201 then stores the generated GUI-screen structured data in a GUI-screen structured-data storage section 202.

### 1) S800

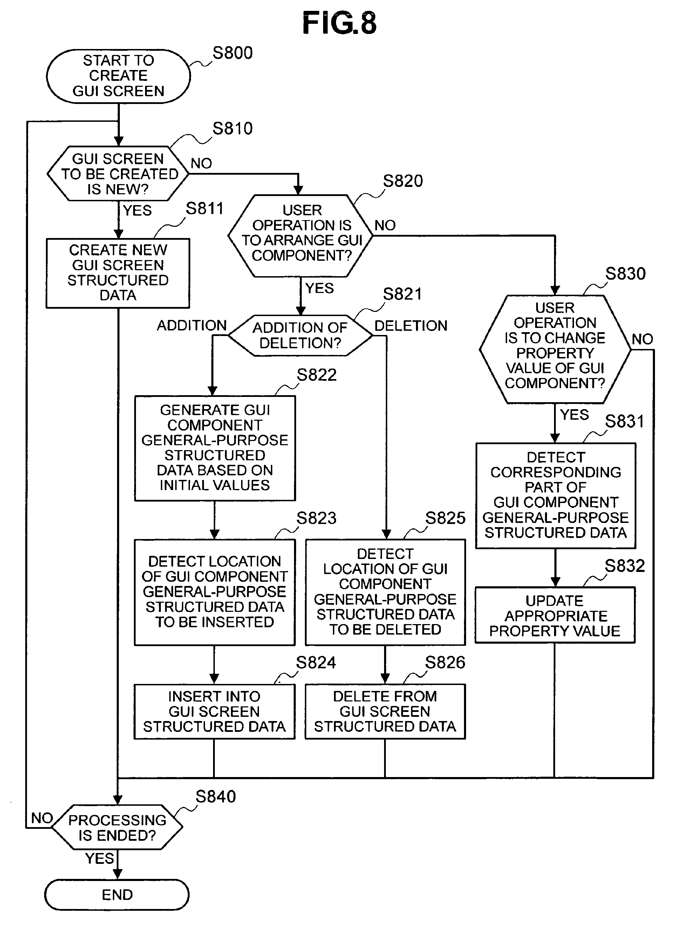

When the user starts to create a GUI screen, processing shown in Fig. 8 is started.

### 2) S810

Processing in step S810 is to determine if a GUI screen to be created is new. If so, the processing proceeds to step S811. If not, the processing proceeds to step S820.

### 3) S811

GUI-screen structured data for the GUI screen is generated. Information on a GUI component which is added to the edition screen and a property value set to the GUI component are thereafter added to the GUI-screen structured data.

### 4) S820

Processing in step S820 is to determine if a user operation is to arrange a GUI component on the edition screen. If so, the processing proceeds to step S821. Otherwise, it proceeds to S830.

### 5) S821

Processing in step S821 is to determine whether the arrangement to be performed by the user operation is to add or delete a GUI component to/from the edition screen. If a GUI component is to be added, the processing proceeds to step S822. If a GUI component is to be deleted, the processing proceeds to step S825.

### 6) S822

Processing in steps S822 to S824 is to add a GUI component.

In step S822, the GUI-screen structured-data generation section 201 refers to data on the general-purpose-GUI-component list, the data being generated by the GUI-component general-purpose-structured-data generation section 103. The GUI-screen structured-data generation section 201 then acquires GUI-component general-purpose structured data corresponding to the arranged GUI component and generates GUI-component general-purpose structured data representing the arranged GUI component (hereinafter referred to as individual GUI-component general-purpose structured data).

Here, the individual GUI-component general-purpose structured data will be explained. It is general-purpose structured data included in the GUI-component general-purpose structured data, in which the GUI component represented by the individual GUI-component general-purpose structured data has been arranged on the GUI screen and has a property value modified or set based on specifications of the GUI screen. In addition, the individual GUI-component general-purpose structured data has a name, an identifier or the like, which can be uniquely identified during execution of a program. The GUI-screen structured-data generation section 201 generates an identification name (e.g., the class name of and serial number of the GUI component) to identify the GUI component in the GUI screen and adds the generated identification name to individual GUI-component general-purpose structured data. For the size and the position among the property values, the information used to arrange the GUI component on the edition screen is used. For the other property values, initial values set in the GUI-component general-purpose structured data are used.

### 7) S823

Next, it is determined whether or not the GUI component is arranged as a base component on the GUI screen or arranged as an element of another GUI component arranged on the GUI screen. The GUI-screen structured-data generation section 201 then determines the location in the GUI-screen structured data, at which the individual GUI-component general-purpose structured data is inserted.

### 8) S824

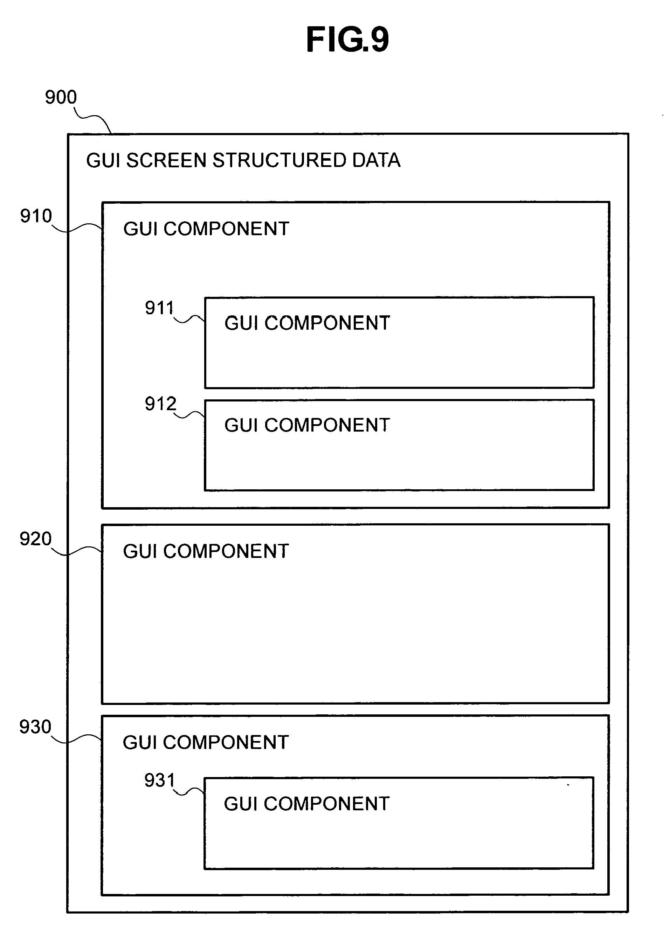

The individual GUI-component general-purpose structured data is inserted in the location in the GUI-screen structured data, the location in the GUI-screen structured data being determined in step S823. Fig. 9 is a diagram showing an example of the GUI-screen structured data having individual GUI-component general-purpose structured data inserted therein. Fig. 9 shows a GUI screen 900 having GUI components 910, 920 and 930 arranged thereon, in which the GUI component 910 also has GUI components 911 and 912, and the GUI component 930 also has a GUI component 931.

### 9) S825

Processing in steps S825 and S826 is to delete a GUI component.

Part of the GUI-screen structured data, from which individual GUI-component general-purpose structured data is to be deleted, is determined based on a deleted identification name (set in step S822) of a GUI component.

### 10) S826

The individual GUI-component general-purpose structured data is deleted from the part of the GUI-screen structured data, which has been determined in step S825. Movement of a GUI component can be achieved by a combination of the addition processing (S822 to S824) and the deletion processing (S825 and S826) although the processing for the movement is not shown in the flowchart of Fig. 8.

### 11) S830

Processing in step S830 is to determine if a user operation is to change a property value of a GUI component on the edition screen. If so, the processing proceeds to step S831. Otherwise, the processing proceeds to step S840.

### 12) Step S831

Processing in steps S831 and S832 is to change a property value.

The processing in step S831 is to detect the location of part of the GUI-screen structured data, which corresponds to a property to be edited, based on the identification name of the GUI component having the property value edited and the property name.

### 13) S832

Next, the property value of the detected part is replaced with a value set by the user.

### 14) S840

Processing in step S840 is to determine whether or not the processing for generating GUI-screen structured data is to be ended. If the processing is not ended, the processing proceeds back to step S810.

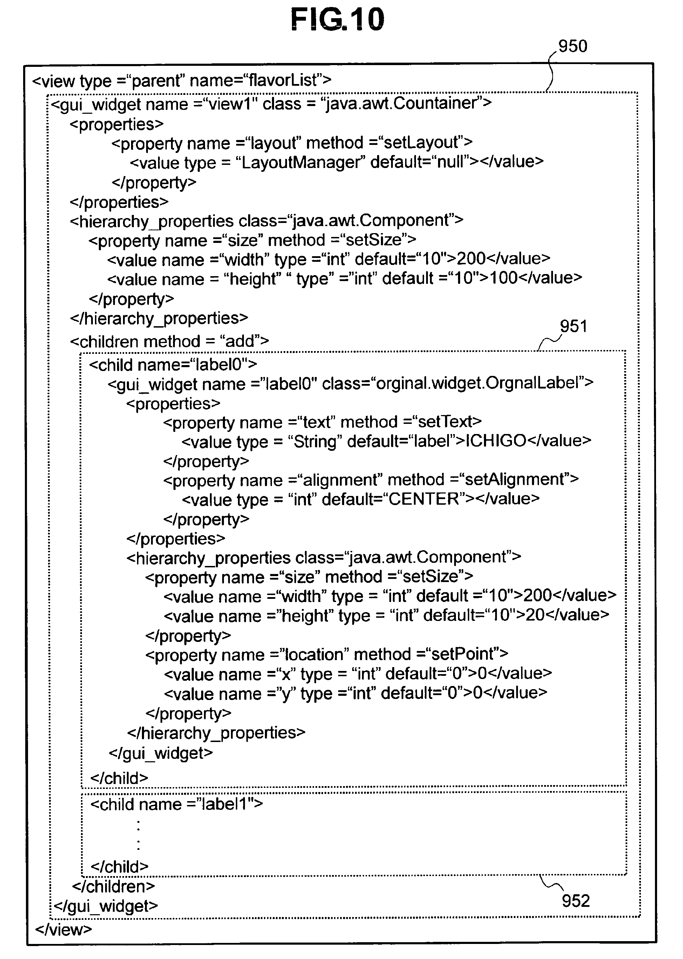

Fig. 10 is a diagram showing an example of the GUI-screen structured data generated by the GUI-screen structured-data generation section 201.

A view tag, which is a <view type="parent" name="flavorList"> tag, indicates that the data described is GUI-screen structured data. In the example shown in Fig. 10, the GUI screen is composed of three GUI components 950, 951 and 952; the GUI component 950 has the GUI components 951 and 952. In the example, a <children> tag expresses the inclusion relationship among the GUI components, and structured data representing a GUI component to be added is inserted in a <child> tag.

The processing for the addition, deletion, and movement of a GUI component and the processing for the edition of a property value are simpler since the structured data has a hierarchical structure.

Processing for generating a GUI program will be described with reference to Fig. 3.

Fig. 3 is a diagram showing the configuration of the GUI-program generating section 106.

The GUI-program generation section 106 generates a GUI application, which runs in the environment of a target device, from the GUI-screen structured data generated by the GUI-screen edition section 105.

In Fig. 3, the GUI-program generation section 106 has a GUI-component-code generation section 300, a GUI-screen-program generation section 301, and a template-program storage section 302. The GUI-component-code generation section 300 refers to structured data representing each of GUI components and set values of properties, the structured data being described in the GUI-screen structured data. The GUI-component-code generation section 300 then generates a code for generating a GUI component by using a programming language used in the target device. As shown in Fig. 7, a method name, an argument name, a type and the like, each of which is used to set a property value, are described in the GUI-component structured data.

The GUI-program generation section 301 generates a program code which expresses the entire GUI screen. The GUI-program generation section 301 inserts a code for set values of the entire GUI screen and the code generated by the GUI-component-code generation section 300 based on the basic structure of an application of the target device, which application is stored in the template-program storage section 302, thereby building a GUI program code.

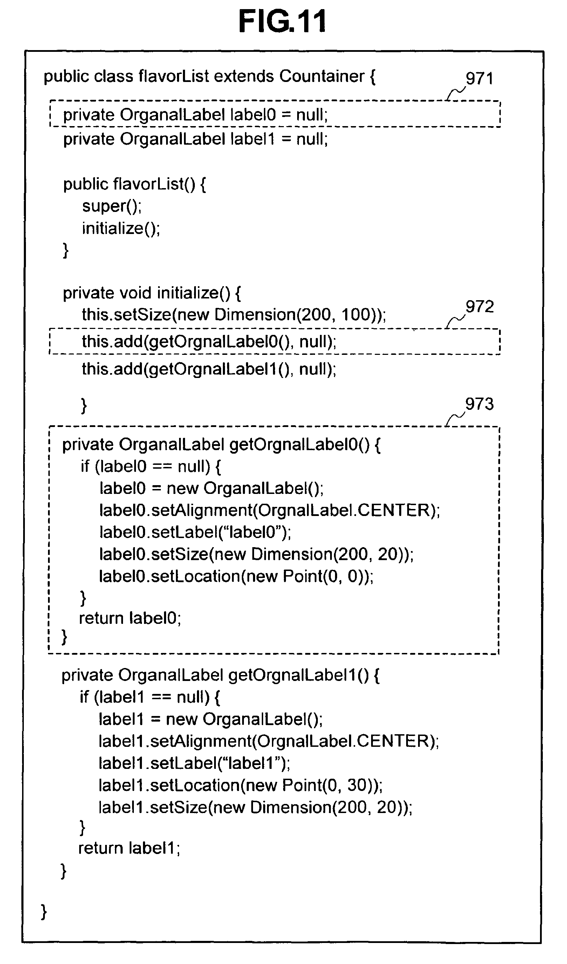

Fig. 11 is a diagram showing an example of the GUI program generated by the GUI-program generation section 301.

In Fig. 11, each of reference numerals 971, 972, and 973 corresponds to the inserted code of the GUI component included in the GUI screen.

As described above, the information for generating the code of the GUI component is described in the GUI-component general-purpose structured data. This makes it easy to generate a code appropriate for the environment of the target device.

Although each of the GUI-component general-purpose-structured-data library 104, the GUI-screen structured-data storage section 202, and the template-program storage section 302 is present in a different storage section in the present embodiment, they may be present in the same storage section.

According to the present embodiment, the GUI screen is edited by using general-purpose GUI-screen structured data in a programming-language-independent format and then converted into a GUI program executable in the environment of the target device, without dependence on the programming language of the target device. This makes it possible, for developers who do not have experience in developing an application for an embedded device and developers (including designers) who do not have programming knowledge, to build a GUI screen more easily than with conventional techniques. In addition, a GUI application running on an embedded device can be easily generated from the built GUI screen.

In the above-mentioned embodiment, the description is made with XML taken as an example. However, the language for describing the structured data is not limited to XML and may be another markup language for describing the meaning or the structure of data. For example, the language for describing the structured data may be a markup language called Extensible HyperText Markup Language (XHTML (registered trademark)), with which it is also possible to achieve the abovementioned embodiment of the present invention.

According to the present invention, the efficiency of GUI-application development for an embedded device and the like can be improved compared with the conventional techniques.

## Claims

1. A device for supporting GUI application development, the device having GUI-component general-purpose structured data in which a general-purpose programming language can be used and comprising:
a GUI-screen edition section for using a GUI component included in the GUI-component general-purpose structured data to generate a GUI screen as GUI-screen structured data in which a general-purpose programming language can be used.

2. A device for supporting GUI application development, the device having GUI-component general-purpose structured data in which a general-purpose programming language can be used and comprising:
a GUI-screen edition section for using a GUI component included in the GUI-component general-purpose structured data to generate a GUI screen as GUI-screen structured data in which a general-purpose programming language can be used; and
a GUI-program generation section for using the GUI-screen structured data and a template program which is executable in a target device to generate a GUI application executable in the target device.

3. The device for supporting GUI application development according to claim 1 or 2, comprising:
a GUI-component general-purpose-structured-data generation section for generating the GUI-component general-purpose structured data, in which a general-purpose programming language can be used, from a uniquely-defined GUI-component library for a GUI component defined in a target device.

4. The device for supporting GUI application development according to claim 1 or 2, wherein
the GUI-component general-purpose-structured-data generation section generates a data list of GUI components included in a uniquely-defined GUI-component library and also generates GUI-component general-purpose structured data expressing a GUI component for each of the GUI components.

5. The device for supporting GUI application development according to claim 1 or 2, wherein
the data list includes at least information on a link to GUI-component general-purpose structured data corresponding to a GUI component class.

6. The device for supporting GUI application development according to claim 1 or 2, wherein
the GUI-component general-purpose structured data includes at least:
the name of a GUI-component class to be used in a uniquely-defined GUI-component library;
the name of and data type of a property for setting a characteristic of the uniquely-defined GUI-component; and
information on a link to GUI-component general-purpose structured data of an inheritance GUI-component class which is another GUI-component class inherited by the GUI component class to be used in the uniquely-defined GUI-component library.

7. The device for supporting GUI application development according to claim 6, wherein
the characteristic of the uniquely-defined GUI-component includes the size and color of the GUI component.

8. The device for supporting GUI application development according to claim 1 or 2, wherein
the GUI-component general-purpose structured data is written in XML.

9. The device for supporting GUI application development according to claim 1 or 2, wherein
the GUI-screen edition section includes:
a GUI-component selection section for showing a list of GUI components available to a user and prompting the user to select and arrange a GUI component to be arranged on the GUI screen;
a property-edition section for providing an interface to set a property value of the GUI component;
a GUI-screen structured-data generation section for acquiring GUI-component general-purpose structured data corresponding to the selected and arranged GUI component from the GUI-component general-purpose-structured-data library, generating individual GUI-component general-purpose structured data with a property value set by the property-edition section, and generating GUI-screen structured data based on the individual GUI-component general-purpose structured data.

10. The device for supporting GUI application development according to claim 1 or 2, wherein
the GUI-program generation section includes:
a GUI-component-code generation section for referring to individual GUI-component general-purpose structured data from the GUI-screen structured data and generating a code of a GUI component defined in a target device; and
a GUI-screen-program generation section for using a template program having a basic structure of an application executable in the target device and for using the code of the GUI component generated by the GUI-component-code generation section to generate a GUI application executable in the target device.

11. A method for supporting GUI application development, the method using GUI-component general-purpose structured data in which a general-purpose programming language can be used and comprising
a GUI-screen edition step of using a GUI component included in the GUI-component general-purpose structured data to generate a GUI screen as GUI-screen structured data in which a general-purpose programming language can be used.

12. A method for supporting GUI application development, the method using GUI-component general-purpose structured data in which a general-purpose programming language can be used and comprising:
a GUI-screen edition step of using a GUI component included in the GUI-component general-purpose structured data to generate a GUI screen as GUI-screen structured data in which a general-purpose programming language can be used; and
a GUI-program generation step of using the GUI-screen structured data and a template program executable in a target device to generate a GUI application executable in the target device.

13. The method for supporting GUI application development according to claim 11 or 12, comprising
a GUI-component general-purpose-structured-data generation step of generating GUI-component general-purpose structured data, in which a general-purpose programming language can be used, from a uniquely-defined GUI-component library defined in a target device.

14. The method for supporting GUI application development according to claim 11 or 12, wherein
in the GUI-component general-purpose-structured-data generation step, a data list of GUI components included in a uniquely-defined GUI-component library is generated, and GUI-component general-purpose structured data expressing a GUI component is generated for each GUI component.

15. The method for supporting GUI application development according to claim 11 or 12, wherein
the data list includes at least information on a link to GUI-component general-purpose structured data corresponding to a GUI component class.

16. The method for supporting GUI application development according to claim 11 or 12, wherein
the GUI-component general-purpose structured data includes at least:
the name of a GUI-component class to be used in a uniquely-defined GUI-component library;
the name of and data type of a property for setting a characteristic of the uniquely-defined GUI-component; and
information on a link to GUI-component general-purpose structured data of an inheritance GUI-component class which is another GUI-component class inherited by the GUI component class to be used in the uniquely-defined GUI-component library.

17. The method for supporting GUI application development according to claim 16, wherein
the characteristic of the uniquely-defined GUI-component includes the size and color of the GUI component.

18. The method for supporting GUI application development according to claim 11 or 12, wherein
the GUI-component general-purpose structured data is written in XML.

19. The method for supporting GUI application development according to claim 11 or 12, wherein
the GUI-screen edition step includes:
a GUI-component selection step of showing a list of GUI components available to a user and prompting the user to select and arrange a GUI component to be arranged on the GUI screen;
a property-edition step of providing an interface to set a property value of the GUI component; and
a GUI-screen structured-data generation step of acquiring GUI-component general-purpose structured data corresponding to the selected and arranged GUI component from the GUI-component general-purpose-structured-data library, generating individual GUI-component general-purpose structured data with a property value set in the property-edition step, and generating GUI-screen structured data from the individual GUI-component general-purpose structured data.
